# EUROPEAN PATENT APPLICATION

(11) **EP 0 941 874 A1**
(43) Date of publication of application: **15.09.1999**
(21) Application number: 99850032.6
(22) Date of filing: 09.03.1999
(51) Int. Cl.: B60D 1/26

(54) **Coupling system and method of actuating a coupling device**

(30) Priority: 11.03.1998 SE 9800784
(71) Applicant: VBG AB, 462 28 Vänersborg (SE)
(72) Inventor: Gustavsson, Hans, 462 55 Vänersborg (SE)
(74) Representative: Franzén, Lars Hjalmar

(57) **Abstract**

In a coupling system for a traction vehicle, a coupling device (2) to mechanically couple together the traction vehicle and a trailer, has a line (3) connected thereto. The end of the line (3) remote from the coupling device (2) is equipped with a connecting means (4), which in turn is connectable to a power outlet (5) for supply of power to a trailer.

Upon actuation of the coupling device (2) it is connected to the power outlet (5) via the connecting means (4) and is actuated by the power supply to either a locked driving position or an open coupling position.

## Description

### Technical Field

The present invention relates to a coupling system for a traction vehicle and a method of actuating a traction-vehicle coupling device, in accordance with the preambles of the appended claims 1 and 10. The invention likewise concerns a traction vehicle equipped with a coupling system of this kind.

### State of the Art

The coupling system for coupling together a traction vehicle and a trailer often, particularly in the case of heavy vehicles, comprises a coupling device arranged at the rear end of the traction vehicle for co-operation with a towing loop on a drawbar at the front end of the trailer. The coupling device comprises a vertical locking bolt which is arranged to be shifted between an open position, wherein the towing loop may be moved into or out of a space in the coupling device, and a locked position of transport, wherein the locking bolt extends through said space so as to pass through a towing loop inside said space to thus mechanically couple together the traction vehicle and the trailer.

Coupling devices of this kind may be heavy to manipulate manually to effect engagement and disengagement. For this reason, coupling devices of this kind often are connected to a power source, usually a source of compressed air, for supply of power to actuate the coupling device between the open and locked positions. This also makes possible various degrees of remote control. Several solutions of power supply for actuation into the open as well as to the closed position are known. For example in DE-B-1 009 495 a coupling device is described, which is spring-biased to a closed position and which by means of compressed air may be moved to the open position by remote control from the driver's seat. In this and other, similar structures there is always, however, a risk that a fault in the coupling device or the power supply may lead to the coupling device unintentionally shifting to the open position during driving, with consequential disengagement of the trailer from the traction vehicle.

Remote-control actuation of the coupling device always carries with it the risk that the operator fails to notice that the parts are not fully coupled together, as may occur for instance as a result of faults in the power supply, or of the locking bolt and the towing loop being clamped together. For this reason, control devices are required, the purpose of which is to indicate conditions of unsuccessful coupling-together, but the provision of such devices makes the coupling-device structure more expensive and more complicated.

### Summary of the Invention

The present invention has for its object to improve safety in vehicle combinations comprising a traction vehicle and a trailer, and more specifically to reduce the risk of unintentional disengagement of the trailer from the vehicle during driving.

One particular object is to ensure reliable locking of the coupling device of a traction vehicle.

These and other objects, which will appear in more detail from the following description, have now been achieved according to the invention by means of a coupling system and a method of the kind defined in the introduction hereto and additionally possessing the particular features defined in the characterising clauses of claims 1 and 10, respectively. The objects are also obtained with a traction vehicle as defined in claim 9.

Thus, the coupling system in accordance with the invention comprises a coupling device and a power supply line attached thereto, said line supporting a connecting means at its end remove from the coupling device for connection to a power tapping point for supply of power to a trailer.

By arranging for the power supply to the coupling device to be effected via a power tapping point, which is used during driving for supply of power to a trailer, it is ensured that the coupling device will not be supplied with power during driving and consequently that if the coupling device were to be unintentionally opened, this will not lead to the trailer being disengaged from the traction vehicle. The invention is particularly advantageous for use with trailers that cannot be moved without being connected to the power tapping point, such as in the case of trailers the brakes of which are not released unless the trailer is supplied with compressed air.

The power supply could be e.g. an electric supply or a hydraulic supply. However, preferably it is a compressed-air supply, connected to the power tapping point, which in this case is a compressed air outlet.

In the case of supply of compressed air, the coupling device is maintained in an open position, when a chamber provided therein is filled. In this case it is advantageous if the chamber may be vented via the connecting means only, for which reason it becomes necessary, in order to couple a trailer to the traction vehicle, to disconnect the connecting means from the power tapping point also for this reason.

In accordance with a preferred embodiment a power tapping point that fits only the connecting means, is arranged at the rear part of the traction vehicle, preferably at the rear side of the traction vehicle. This arrangement precludes all possibility of inadvertent use of different power tapping point means for coupling devices and trailers. In addition, this arrangement ensures that the operator of the coupling device assumes a position that allows him to visually check the coupling process, making him aware of any coupling problems that may arise.

Preferably, the coupling device is spring-biased towards the driving position and comprises a drive means, which may be actuated by the power supply and which is operable only for the purpose of actuating the coupling device towards the open position. This feature guarantees an even higher degree of safety. Not only does it eliminate the risk that a force acting to effect opening during driving, but in addition a force constantly acts on the coupling device during driving to urge the latter to the locked position.

In accordance with one safe manner of actuating the coupling device according to the invention, the coupling device is first connected to the power source via the power tapping point. Thereafter this power supply is used to actuate the coupling device.

According to one aspect of the invention, the latter resides in a vehicle combination consisting of a traction vehicle and a trailer, which may be coupled to a coupling device mechanically. In this case, the traction vehicle is formed with one single power tapping point which is common to the trailer and the coupling device, and either the power supply of the trailer or the power supply of the coupling device may be connected to said common power tapping point, thus ensuring that the trailer and the coupling device cannot be supplied with power simultaneously.

### Description of a Preferred Embodiment of the Invention

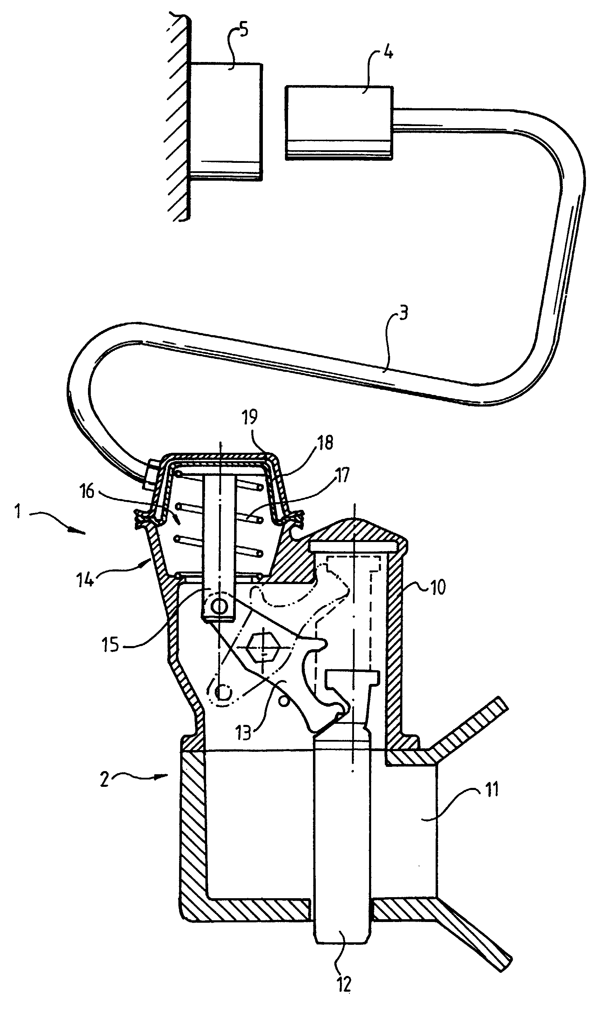

The invention will be described in more detail in the following for exemplifying purposes with reference to the accompanying drawing figure, which schematically shows a preferred embodiment of the coupling system in accordance with the invention.

The drawing figure shows a coupling system 1 comprising a coupling device 2, shown in a sectionalised view, to which is connected a line in the form of a compressed-air hose 3, which is equipped with a connecting means 4, and a power tapping point in the form of a compressed-air outlet 5 to which the connecting means 4 may be connected. All these parts are provided at the rear end of a traction vehicle, not shown, such as a truck. The power tapping point 5 is intended for trailers, particularly for actuation of the brakes thereof, and may for example be of the type known as "DUOMATIC".

The coupling device 2 comprises a housing 10 in which is formed a space 11 for accommodation of a towing loop (not shown) on a trailer drawbar. Further, the coupling device 2 comprises a locking bolt 12, which is arranged to move vertically between a locked position during driving, shown in full lines, and an open position, shown in dashed line, for engagement and disengagement of a trailer to and from the traction vehicle.

Via an actuating arm 13, the locking bolt 12 may be actuated by a drive means 14, which comprises a piston 15, the latter being mounted inside a chamber 15 for movement, when actuated, between an upper position and a lower position (not shown). A compression spring 17 is arranged to urge the piston 15 upwards, to the upper position corresponding to the closed position of the coupling device 2. The upper face of the piston 15 abuts against a diaphragm 18 of rubber or some other material possessing similar properties, the upper face of said diaphragm sealingly delimiting a compressed-air chamber 19. Upon supply of compressed air to the chamber 19, the diaphragm 18 and the piston 15 are urged downwards, against the action of spring 17, and open the coupling device 2.

The piston 15 is guided radially by the spring 17 and the diaphragm 18, and consequently the lower end of the piston may move laterally and its upper part is able to absorb torsion during the upwards and downwards piston movements to actuate the coupling device 2. In this manner a simple and stable rotational connection between the actuating arm 13 and the piston 15 is made possible.

When a trailer is to be coupled to the traction vehicle, the coupling device 2 is initially opened by connecting the connecting means 4 to the compressed-air outlet 5, whereby compressed air is admitted into the chamber 19. Preferably, the compressed-air outlet 5 is under constant pressure to ensure automatic supply of compressed air to the coupling device 2, when the connecting means is connected to the outlet 5. However, it is equally possible to arrange some kind of regulating device, such as e.g. a compressed-air valve, the purpose of which is to open or close the supply from the source of compressed air (or, as the case may be, from some other power source). A regulating device of this kind preferably may be arranged at some suitable location between the source of power and the coupling device drive means.

When the coupling device 2 has been opened, it is locked in that position as a result of the co-operation between the actuating arm 13 and the locking bolt 12, and possibly also some additional locking means (not shown). In this open position of the coupling device a trailer may be coupled to or disengaged from the traction vehicle.

In order to bring the coupling device 2 to the closed position thereof, it is necessary to first disconnect the connecting means 4 from the compressed-air outlet 5, whereby the compressed air inside the chamber 19 will be vented through the hose 3. As a result, the coupling device 2 will be locked in its open position until release of the blocking function of the locking bolt 12, which release is effected by the towing loop, as the latter is entered into the space 11. A considerable advantage in this respect is that the actuating operation takes place in close vicinity to the coupling device 2, which makes supervision of the coupling-together procedure very simple.

The power tapping point 5 preferably is mounted close to the coupling device 2 and within the reach of the hose 3, i.e. in such a manner that the distance between the coupling device 2 and the power tapping point 5 is smaller than the length of hose 3. It is likewise preferable that only one power tapping point 5 of a configuration fitting the connecting means 4 is located within the range of the hose.

## Claims

1. A coupling system for a traction vehicle, comprising
a coupling device (2) to mechanically couple together the traction vehicle and a trailer, said coupling device (2) arranged to be actuated between an open coupling position and a closed driving position;
a line (3) one end of which is connected to the coupling device (2) to supply power to said device upon actuation thereof, and
a power tapping point (5) for supply of power to a trailer, **characterised** in that said line (3) is equipped at its opposite end with a connecting means (4), which is connectable to the power tapping point (5).

2. A coupling system as claimed in claim 1, comprising a compressed-fluid system, which is connected to the power tapping point (5) for supply of power.

3. A coupling system as claimed in claim 2, **characterised** in that said compressed-fluid system is a compressed-air system.

4. A coupling system as claimed in claim 3, wherein the coupling device (2) comprises a compressed-air chamber (19), said coupling device (2) arranged to be maintained in its open position when the chamber (19) is filled and wherein the chamber (19) may be vented only via said connecting means (4).

5. A coupling system as claimed in any one of the preceding claims, wherein one single power tapping point (5) fitting said connecting means (4) is arranged at the rear part of the traction vehicle, preferably at the rear side of the traction vehicle.

6. A coupling system as claimed in any one of the preceding claims, wherein the coupling device (2) is spring-biased towards the driving position.

7. A coupling system as claimed in any one of the preceding claims, wherein said coupling device (2) comprises a drive means (14), which is operable by the power supply and which is operable only for the purpose of actuating the coupling device (2) to the open position.

8. A coupling system as claimed in claim 7, wherein the drive means (14) comprises a compressed-air piston (15), which is operable in one direction.

9. A traction vehicle comprising a coupling system (1) in accordance with any one of claims 1-8.

10. A method of actuating a coupling device (2) of a traction vehicle between a locked driving position and an open coupling position, **characterised** by the steps of
temporarily connecting the coupling device (2) to a source of power via a power tapping point (5) for supply of power to a trailer, and
thereafter using power supplied via said power tapping point to actuate said coupling device (2) to either the coupling position or the driving position.
